# FASCICULE DE BREVET EUROPEEN

(11) **EP 3 279 746 B1**
(45) Date de publication et mention de la délivrance du brevet: **29.01.2020**
(21) Numéro de dépôt: 16183072.4
(22) Date de dépôt: 05.08.2016
(51) Int. Cl.: G04G 9/00, G04G 21/00, G06Q 20/12, G06Q 20/40, G07C 9/00, G07F 7/10

(54) **PROCEDE DE DEVERROUILLAGE D'UNE FONCTION A L'AIDE D'UNE PIECE D'HORLOGERIE**
VERFAHREN ZUM ENTRIEGELN EINER FUNKTION MIT HILFE EINER UHR
METHOD FOR UNLOCKING A FUNCTION USING A TIMEPIECE

(43) Date de publication de la demande: 07.02.2018
(73) Titulaire: ETA SA Manufacture Horlogère Suisse, 2540 Grenchen (CH)
(72) Inventeur: MEYER, Vincent, 2504 Biel/Bienne (CH); KRAEHENBUEHL, David Benjamin, 2544 Bettlach (CH)
(74) Mandataire: Ravenel, Thierry Gérard Louis

(56) Documents cités:
- EP-A1- 1 491 974
- DE-U1- 8 528 633
- FR-A1- 2 682 206
- GB-A- 2 296 115

## Description

### DOMAINE TECHNIQUE

La présente invention concerne un procédé de déverrouillage d'une fonction à l'aide d'une pièce d'horlogerie.

### ART ANTERIEUR

La plupart des appareils électroniques de type tablette, smartphone, ordinateur doivent être déverrouillés avant d'être utilisés. C'est également le cas de la plupart des applications stockées sur ces appareils.

Ce déverrouillage peut être effectué grâce à la saisie d'un mot de passe, d'un code pin, grâce à une signature ou encore grâce à un schéma de déverrouillage que l'on dessine à l'aide de son doigt sur un écran tactile.

Toutefois, la multiplication des appareils ou applications à déverrouiller a conduit à la multiplication des mots de passe à retenir. En outre, les mots de passe entrés ou les schémas de déverrouillage réalisés sont visibles par des tiers, de sorte qu'ils peuvent être reproduits.

C'est pourquoi d'autres techniques de déverrouillage ont été développées, comme par exemple la reconnaissance d'empreintes digitales. Toutefois, cette technique n'est pas non plus totalement fiable puisqu'une empreinte digitale peut être falsifiée.

On connaît par ailleurs du document EP 1491974 A1 une pièce d'horlogerie comprenant des aiguilles d'heures et de minutes formant un dispositif d'affichage et des moyens de commande configurés pour entraîner les aiguilles selon une séquence d'animation prédéfinie, cette animation pouvant être activée à l'aide de la tige.

On connaît également du document DE 8528633 U1 une montre munie d'une source lumineuse pouvant sur commande, émettre une séquence lumineuse représentative d'un code de déverrouillage en direction d'un rétroviseur d'un véhicule comprenant une cellule photoélectrique reliée à un circuit comparateur, qui après analyse du signal lumineux reçu, déverrouille le véhicule si le signal correspond au signal de déverrouillage préenregistré.

### RESUME DE L'INVENTION

L'invention vise à remédier aux inconvénients de l'état de la technique en proposant une technique permettant de déverrouiller un appareil, notamment un appareil électronique ou une application, qui soit plus simple et plus fiable que les techniques de l'art antérieur.

Pour ce faire, est proposé selon un premier aspect de l'invention, un procédé de déverrouillage d'une fonction d'un appareil à l'aide d'une pièce d'horlogerie, la pièce d'horlogerie comportant :
- un dispositif d'affichage comportant des éléments d'affichage ;
- des moyens de commande aptes à entraîner les éléments d'affichage selon une séquence d'animation prédéfinie ;
le procédé comportant les étapes suivantes :
- la pièce d'horlogerie est placée en face des moyens de détection ;
- les moyens de commande sont activés de façon à ce qu'ils entraînent les éléments d'affichage suivant la séquence d'animation prédéfinie ;
- la séquence d'animation prédéfinie est détectée;
- la séquence d'animation détectée est comparée à une séquence d'animation de référence ;
- si la séquence d'animation détectée est identique à la séquence d'animation de référence, alors la fonction est déverrouillée.

Ainsi, ce procédé permet de réaliser une séquence d'animation prédéfinie à l'aide des éléments d'affichage de la pièce d'horlogerie. Cette séquence d'animation est reconnue par l'appareil à déverrouiller, ce qui déverrouille l'appareil.

Le procédé selon le premier aspect de l'invention peut également présenter une ou plusieurs des caractéristiques ci-après prises individuellement ou selon toutes les combinaisons techniquement possibles.

Avantageusement, le procédé comporte une étape d'initialisation de la pièce d'horlogerie au cours de laquelle la séquence d'animation prédéfinie est enregistrée dans la pièce d'horlogerie de façon à ce que l'activation des moyens de commande entraîne les éléments d'affichage suivant la séquence d'animation prédéfinie. L'utilisateur peut ainsi choisir la séquence d'animation qui sera effectuée par la pièce d'horlogerie. Toutefois, cette séquence d'animation peut également être d'abord définie lors de la fabrication de la pièce d'horlogerie, afin d'éviter que tous les modèles aient la même séquence d'animation.

Avantageusement, le procédé comporte également une étape d'initialisation de l'appareil au cours de laquelle la séquence d'animation de référence est enregistrée dans l'appareil. Cette étape permettra à l'utilisateur de choisir la séquence d'animation permettant de déverrouiller la fonction.

Selon différents modes de réalisation :
- le procédé comporte en outre une étape d'activation des moyens de commande dans laquelle au moins un bouton de la pièce d'horlogerie est actionné, ce qui permet à l'utilisateur d'enclencher facilement la séquence d'animation ;
- le procédé comporte en outre une étape d'activation des moyens de commande dans laquelle au moins deux boutons de la pièce d'horlogerie sont actionnés suivant une séquence d'activation prédéterminée, ce qui permet de sécuriser le procédé de déverrouillage, puisque l'utilisateur doit alors savoir quelle séquence d'activation effectuer pour démarrer la séquence d'animation qui permettra de déverrouiller la fonction.

Les boutons de la pièce d'horlogerie peuvent être actionnés en appuyant dessus, en tirant dessus, en les tournant...

Avantageusement, la séquence d'animation comporte, pour chacun des éléments d'affichage, une suite de positions prédéfinies pendant une durée prédéfinie.

Un deuxième aspect de l'invention concerne l'utilisation d'une pièce d'horlogerie pour la mise en œuvre d'un procédé de déverrouillage selon le premier aspect de l'invention, la pièce d'horlogerie comportant :
- un dispositif d'affichage comportant des éléments d'affichage ;
- des moyens de commande configurés pour entraîner les éléments d'affichage selon une séquence d'animation prédéfinie.

L'utilisation d'une pièce d'horlogerie peut également présenter une ou plusieurs des caractéristiques ci-après, prises individuellement ou selon toutes les combinaisons techniquement possibles.

Selon différents modes de réalisation, les éléments d'affichage peuvent être :
- des aiguilles permettant d'indiquer le temps ;
- des aiguilles de compteurs ;
- un écran ;
- des éléments d'animation.

Avantageusement, la pièce d'horlogerie comporte en outre des moyens d'activation aptes à activer les moyens de commande.

Ces moyens d'activation peuvent être :
- des boutons ;
- des boutons poussoirs ;
- des couronnes.

### BREVE DESCRIPTION DES FIGURES

D'autres caractéristiques et avantages de la présente invention apparaîtront plus clairement dans la description détaillée suivante des modes de réalisation préférés, présentés à titre d'exemple non limitatifs en référence aux figures annexées, parmi lesquelles:
- la figure 1 représente schématiquement une pièce d'horlogerie selon un mode de réalisation de l'invention ;
- la figure 2 représente schématiquement un appareil à déverrouiller selon un mode de réalisation de l'invention ;
- la figure 3 représente schématiquement les étapes d'un procédé selon un mode de réalisation de l'invention ;
- les figures 4a à 4d représentent les positions successivement que peuvent prendre les éléments d'affichage lors d'une séquence d'animation utilisée dans le procédé de la figure 3.

### DESCRIPTION DETAILLEE

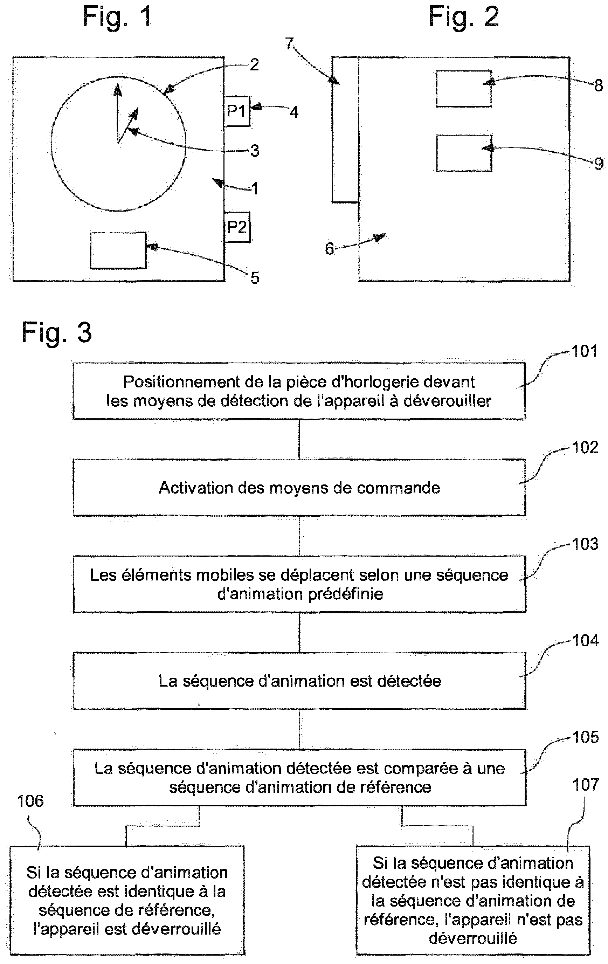

Un procédé de déverrouillage selon un mode de réalisation de l'invention va maintenant être décrit en référence aux figures 1 à 4d.

Ce procédé utilise une pièce d'horlogerie 1. Cette pièce d'horlogerie peut être une montre. La pièce d'horlogerie 1 comporte un dispositif d'affichage 2. Ce dispositif d'affichage peut être un cadran. Le dispositif d'affichage 2 comporte des éléments d'affichage 3. Ces éléments d'affichage 3 peuvent être :
- des aiguilles d'affichage du temps ;
- des cristaux digitaux ;
- un écran ;
- des aiguilles ou des cristaux de compteurs ;
- des éléments décoratifs pouvant être animés...

La pièce d'horlogerie comporte également des moyens d'activation 4 pouvant être actionnés par l'utilisateur. Ces moyens d'activation 4 peuvent par exemple comporter par exemple des boutons, des boutons poussoirs, des couronnes... La pièce d'horlogerie 1 comporte également des moyens de commande 5 configurés pour animer les éléments d'affichage 3 de la montre suivant une séquence d'animation prédéfinie lorsqu'ils sont actionnés par les moyens d'activation 4.

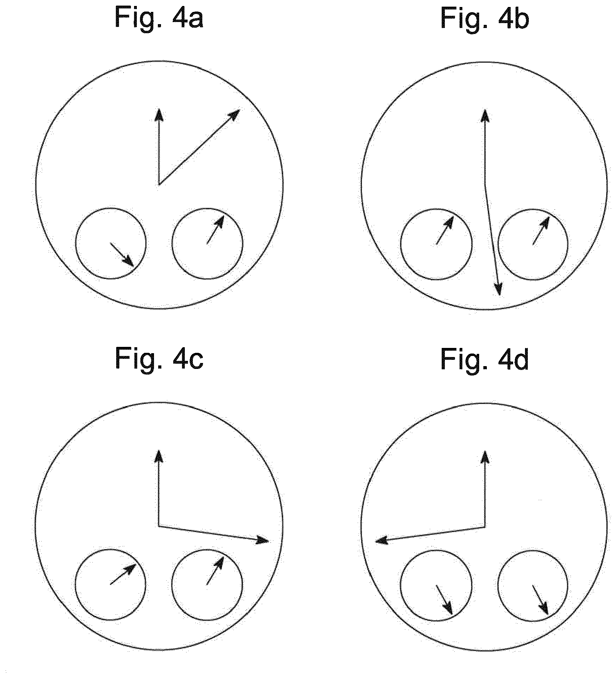

Ainsi, à titre d'exemple, la pièce d'horlogerie de la figure 1 comporte comme moyens d'activation 4 deux boutons poussoirs P1 et P2. Lorsque ces deux boutons poussoirs sont pressés suivant une séquence d'activation prédéfinie, par exemple P1 P2 P2 P1, les éléments d'affichage 3 vont être animés suivant une séquence d'animation prédéfinie. Cette séquence d'animation prédéfinie peut par exemple être celle représentée sur les figures 4a à 4d : dans ce cas, les éléments d'affichage de la montre vont prendre successivement les positions représentées sur les figures 4a à 4d, chaque position étant conservée pendant une durée prédéterminée.

La séquence d'animation prédéfinie est de préférence préréglée en usine, afin que chaque montre ait une séquence d'animation qui lui est propre. Toutefois, on peut également prévoir que la séquence d'animation soit réglable par l'utilisateur, tout comme la séquence d'activation qui permettra de l'enclencher.

Cette pièce d'horlogerie va pouvoir être utilisée pour déverrouiller une fonction d'un appareil 6 comme celui représenté sur la figure 2.

L'appareil peut par exemple être :
- un appareil électronique comme un smartphone ou un ordinateur,
- un appareil domotique, par exemple de type porte ou volet roulant,
- un coffre fort...

Le procédé permet par exemple de déverrouiller la fonction démarrage de l'appareil, une application stockée sur l'appareil, l'ouverture ou la fermeture de l'appareil, la transmission de données vers l'appareil...

Pour ce faire, l'appareil 6 comporte des moyens de détection 7 d'une séquence d'animation. Ces moyens de détection 7 comportent de préférence une caméra apte à filmer une séquence d'animation. L'appareil 6 comporte également de préférence une mémoire apte à mémoriser la séquence d'animation détectée. L'appareil 6 comporte également des moyens de comparaison 8 aptes à comparer la séquence d'animation détectée avec une séquence d'animation de référence. Ces moyens de comparaison 8 comportent de préférence un processeur. L'appareil 6 comporte également des moyens de déverrouillage 9 de la fonction configurés pour déverrouiller la fonction lorsque la séquence d'animation détectée est identique à la séquence d'animation de référence. Ces moyens de déverrouillage comportent de préférence un processeur.

La séquence d'animation de référence est de préférence enregistrée par l'utilisateur dans l'appareil, lors d'une étape d'initialisation. Toutefois, elle peut également être pré-enregistrée dans l'appareil lors de sa fabrication.

Les étapes du procédé vont maintenant être décrites en référence à la figure 3.

Le dispositif d'affichage 2 de la pièce d'horlogerie est tout d'abord placé devant les moyens de détection 7 de l'appareil 6 lors d'une étape 101.

Les moyens d'activation 4 sont ensuite activés suivant une séquence d'activation prédéfinie lors d'une étape 102. Pour ce faire, les boutons poussoirs P1, P2 sont pressés suivant une combinaison prédéterminée, par exemple P1 P2 P2 P1.

Les moyens de commande 5 déclenchent alors la séquence d'animation prédéterminée lors d'une étape 103.

Les moyens de détection 7 détectent alors la séquence d'animation effectuée par les éléments d'affichage lors d'une étape 104.

Les moyens de comparaison 8 comparent ensuite la séquence d'animation détectée avec la séquence d'animation de référence lors d'une étape 105.

Si la séquence d'animation détectée est identique à la séquence d'animation de référence, alors le procédé comporte une étape 106 de déverrouillage de la fonction.

Si la séquence d'animation détectée n'est pas identique à la séquence d'animation de référence, alors la fonction n'est pas déverrouillée.

Le procédé permet donc de déverrouiller une fonction d'un appareil sans que l'utilisateur ait à se souvenir d'une combinaison complexe. En outre, le procédé est sécurisé, puisque même si un tiers observe la combinaison sur les boutons poussoirs de la montre ou la séquence d'animation, il ne dispose pas de la montre, de sorte qu'il ne peut pas reproduire la séquence d'animation observée.

Naturellement l'invention n'est pas limitée aux modes de réalisation décrits en référence aux figures et des variantes pourraient être envisagées sans sortir du cadre de l'invention.

## Revendications

1. Procédé de déverrouillage d'une fonction d'un appareil (6) à l'aide d'une pièce d'horlogerie (1), la pièce d'horlogerie (1) comportant :
- un dispositif d'affichage (2) comportant des éléments d'affichage (3) ;
- des moyens de commande (5) aptes à entraîner les éléments d'affichage (3) selon une séquence d'animation prédéfinie ;
- le procédé comportant les étapes suivantes :
- (101) la pièce d'horlogerie (1) est placée devant des moyens de détection (7);
- (102) les moyens de commande (5) sont activés de façon à ce qu'ils entraînent les éléments d'affichage (3) suivant la séquence d'animation prédéfinie ;
- (104) la séquence d'animation prédéfinie est détectée par les moyens de détection (7);
- (105) la séquence d'animation détectée est comparée à une séquence d'animation de référence ;
- (106) si la séquence d'animation détectée est identique à la séquence d'animation de référence, alors la fonction est déverrouillée.

2. Procédé selon la revendication précédente, comportant une étape d'initialisation de la pièce d'horlogerie (1) au cours de laquelle la séquence d'animation prédéfinie est enregistrée dans la pièce d'horlogerie (1) de façon à ce que l'activation des moyens de commande (5) entraîne les éléments d'affichage (3) suivant la séquence d'animation prédéfinie.

3. Procédé selon l'une des revendications précédentes, comportant une étape d'initialisation de l'appareil (6) au cours de laquelle la séquence d'animation de référence est enregistrée dans l'appareil (6).

4. Procédé selon l'une des revendications précédentes, comportant en outre une étape d'activation des moyens de commande dans laquelle au moins un bouton de la pièce d'horlogerie est actionné.

5. Procédé selon l'une des revendications précédentes, comportant en outre une étape d'activation des moyens de commande dans laquelle au moins deux boutons de la pièce d'horlogerie sont actionnés suivant une séquence d'activation prédéterminée.

6. Procédé selon l'une des revendications précédentes, dans lequel la séquence d'animation comporte, pour chacun des éléments d'affichage, une suite de positions prédéfinies pendant une durée prédéfinie.

7. Utilisation d'une pièce d'horlogerie (1) pour la mise en œuvre d'un procédé de déverrouillage selon l'une des revendications 1 à 6 comportant :
- un dispositif d'affichage (2) comportant des éléments d'affichage (3);
- des moyens de commande (5) configurés pour entraîner les éléments d'affichage (3) selon une séquence d'animation prédéfinie.

8. Utilisation d'une pièce d'horlogerie selon la revendication précédente, comportant des moyens d'activation (4) aptes à activer les moyens de commande (5).

## Patentansprüche

1. Verfahren zum Entriegeln einer Funktion einer Vorrichtung (6) mit Hilfe einer Uhr (1), wobei die Uhr (1) umfasst:
- eine Anzeigevorrichtung (2) mit Anzeigeelementen (3);
- Steuermittel (5), die zum Antreiben der Anzeigeelemente (3) gemäß einer vordefinierten Animationssequenz geeignet sind;
- wobei das Verfahren die folgenden Schritte umfasst:
- (101) In-Lage-bringen der Uhr (1) vor einem Erkennungsmittel (7);
- (102) Aktivieren der Steuermittel (5), derart, dass sie die Anzeigeelemente (3) gemäß einer vordefinierten Animationssequenz antreiben;
- (104) Erkennen der vordefinierten Animationssequenz durch das Erkennungsmittel (7);
- (105) Vergleichen der erkannten Animationssequenz mit einer Referenzanimationssequenz;
- (106) Entriegeln der Funktion, wenn die erkannte Animationssequenz identisch mit der Referenzanimationssequenz ist;

2. Verfahren nach dem vorhergehenden Anspruch, umfassend einen Initialisierungsschritt der Uhr (1), während dessen die vordefinierte Animationssequenz in der Uhr (1) aufgezeichnet wird, so dass die Aktivierung der Steuermittel (5) die Anzeigeelemente (3) gemäß der vordefinierten Animationssequenz antreibt.

3. Verfahren nach einem der vorhergehenden Ansprüche, umfassend einen Initialisierungsschritt der Vorrichtung (6), während dessen die Referenzanimationssequenz in der Vorrichtung (6) aufgezeichnet wird.

4. Verfahren nach einem der vorhergehenden Ansprüche, ferner umfassend einen Aktivierungsschritt der Steuermittel, bei dem mindestens eine Taste der Uhr betätigt wird.

5. Verfahren nach einem der vorhergehenden Ansprüche, ferner umfassend einen Aktivierungsschritt der Steuermittel, bei dem mindestens zwei Tasten der Uhr nach einer vordefinierten Animationssequenz betätigt werden.

6. Verfahren nach einem der vorhergehenden Ansprüche, bei dem die Animationssequenz für jedes der Anzeigeelemente eine Folge vorgegebener Stellungen über einen vorher eingestellten Zeitraum umfasst.

7. Verwendung einer Uhr (1) zum Durchführen eines Entriegelungsverfahrens nach einem der Ansprüche 1 bis 6, umfassend:
- eine Anzeigevorrichtung (2), die Anzeigeelemente (3) umfasst;
- konfigurierte Steuermittel (5), um die Anzeigeelemente (3) gemäß einer vordefinierten Animationssequenz anzutreiben.

8. Verwendung einer Uhr nach dem vorhergehenden Anspruch, umfassend Aktivierungsmittel (4), die zum Aktivieren der Steuermittel (5) geeignet sind.

## Claims

1. Method for unlocking a function of a device (6) using a timepiece (1), the timepiece (1) including:
- a display device (2) including display elements (3);
- control means (5) able to drive the display elements (3) in a predefined animation sequence;
- the method including the following steps:
- (101) the timepiece (1) is placed in front of detection means (7);
- (102) the control means (5) are actuated so that they drive the display elements (3) in the predefined animation sequence;
- (104) the predefined animation sequence is detected by the detection means (7);
- (105) the detected animation sequence is compared to a reference animation sequence;
- (106) if the detected animation sequence is identical to the reference animation sequence, then the function is unlocked.

2. Method according to the preceding claim, including a step of initialising the timepiece (1) during which the predefined animation sequence is stored in the timepiece (1) so that actuation of the control means (5) drives the display elements (3) in the predefined animation sequence.

3. Method according to any of the preceding claims, including a step of initialising the device (6) during which the reference animation sequence is stored in the device (6).

4. Method according to any of the preceding claims, further including a step of actuating the control means in which at least one timepiece button is actuated.

5. Method according to any of the preceding claims, further including a step of actuating the control means in which at least two timepiece buttons are actuated in a predetermined actuation sequence.

6. Method according to any of the preceding claims, wherein the animation sequence includes a series of predefined positions for a predefined duration for each of the display elements.

7. Use of a timepiece (1) for implementing an unlocking method according to any of claims 1 to 6 including:
- a display device (2) including display elements (3);
- control means (5) configured to drive the display elements (3) in a predefined animation sequence.

8. Use of a timepiece according to the preceding claim, including actuation means (4) able to actuate the control means (5).
